# EUROPÄISCHE PATENTSCHRIFT

(11) **EP 0 603 543 B1**
(45) Veröffentlichungstag und Bekanntmachung des Hinweises auf die Patenterteilung: **04.02.1998**
(21) Anmeldenummer: 93118541.7
(22) Anmeldetag: 18.11.1993
(51) Int. Cl.: F02D 41/14, F02D 41/22

(54) **Verfahren und Vorrichtung zur Überwachung einer Steuereinrichtung einer Brennkraftmaschine**
Method and apparatus to monitor a control apparatus in a combustion engine
Méthode et dispositif de surveillance d'un dispositif de commande dans un moteur à combustion

(30) Priorität: 22.12.1992 DE 4243493
(43) Veröffentlichungstag der Anmeldung: 29.06.1994
(73) Patentinhaber: ROBERT BOSCH GMBH, 70442 Stuttgart (DE)
(72) Erfinder: Engel, Gerhard, Dipl.-Ing., D-70469 Stuttgart (DE); Birk, Manfred, Dipl.-Ing., D-71739 Oberriexingen (DE); Rupp, Peter, Dipl.-Ing., D-71686 Remseck (DE); Paule, Jürgen, D-73061 Ebersbach/Fils (DE)

(56) Entgegenhaltungen:
- WO-A-90/09517
- DE-A- 4 122 828
- DE-A- 4 235 503
- VEHICLE ELECTRONICS IN THE 90'S :PROCEEDINGS OF THE INTERNATIONAL CONGRESS ON TRANSPORTATION ELECTRONICS. Bd. P-233 , Oktober 1990 , S.A.E.901152. WARRENDALE,PA Seiten 285 - 298 XP000223550 TOKUTA INOUE ET.AL. 'FUTURE ENGINE CONTROL'

## Beschreibung

### Stand der Technik

Die Erfindung betrifft ein Verfahren und eine Vorrichtung zur Überwachung einer Steuereinrichtung einer Brennkraftmaschine gemäß den Oberbegriffen der unabhängigen Ansprüche.

Ein Verfahren und eine Vorrichtung zur Überwachung einer Steuereinrichtung einer Brennkraftmaschine ist aus der DE-OS 28 05 876 bekannt. Dort wird ein Verfahren und eine Vorrichtung beschrieben, bei dem überprüft wird, ob eine Stellgröße für ein Stellwerk einen festen unteren oder einen festen oberen Grenzwert übersteigt. Bei einer solchen Vorgehensweise werden Sensoren nur auf Überschreiten eines vorgegebenen Signalbereichs überwacht. Fehler werden nur dann erkannt, wenn der Signalbereich verlassen wird. Mit dieser Vorgehensweise können nur schwerwiegende Fehler, wie beispielsweise eine Unterbrechung einer Leitung, erkannt werden. Geringfügige stationäre und/oder dynamische Abweichungen der Signale von den exakten Werten können hier nicht erkannt werden.

Aus der WO-A-90 09 517 ist ein Verfahren zum Erkennen der Betriebsbereitschaft einer Lambdasonde bekannt. Im Schubbetrieb wird überprüft, ob das Ausgangssignal der Lambdasonde ein mageres Gemisch anzeigt. Ist dies nicht der Fall, so wird auf Fehler der Lambdasonde erkannt.

Dynamische Abweichungen der Signale von den exakten Werten können mit dieser Vorgehensweise nicht erkannt werden.

### Aufgabe der Erfindung

Der Erfindung liegt die Aufgabe zugrunde, bei einem Verfahren einer Vorrichtung zur Überwachung einer Steuereinrichtung einer Brennkraftmaschine der eingangs genannten Art eine Möglichkeit aufzuzeigen, mit der die Steuereinrichtung im laufenden Betrieb dahingehend überwacht werden kann, ob die Lambdasonde ordnungsgemäß arbeitet. Dabei soll ein Defekt bzw. ein Fehler der Lambdasonde bereits vor dem völligen Ausfall der Sonde erkannt werden. Diese Aufgabe wird durch die Merkmale der unabhängigen Ansprüchen gelöst.

### Vorteile der Erfindung

Mit dem erfindungsgemäßen Verfahren und der erfindungsgemäßen Vorrichtung nach Anspruch 1 bzw. ist es möglich, die Lambdasonde dahingehend zu überwachen, ob sie ordnungsgemäß arbeiten. Insbesondere kann ein Defekt der Lambdasonde bereits vor dem völligen Ausfall der Sonde erkannt werden. Dadurch können erhöhte Abgasemissionen bei einem sich abzeichnenden Defekt vermieden werden.

Zusätzliche Sensoren, als die neben den zur Steuerung der Brennkraftmaschine verwendeten Sensoren, sind nicht erforderlich.

Mit der erfindungsgemäßen Vorgehensweise, insbesondere bei Einsatz ein Fuzzy-Logik ist es möglich, das Ausgangssignal des Sensors auf seine stationäre und dynamische Funktionsfähigkeit zu überwachen.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert.

Es zeigen Figur 1 ein grob schematisch ein System zur Steuerung einer Brennkraftmaschine, Figur 2 eine Überwachungseinrichtung, Figur 3 eine Überwachungseinrichtung im Detail, Figur 4 eine weitere Überwachungseinrichtung im Detail und Figur 5 die Zugehörigkeitsfunktionen einer Fuzzy-Logik.

### Beschreibung der Ausführungsbeispiele

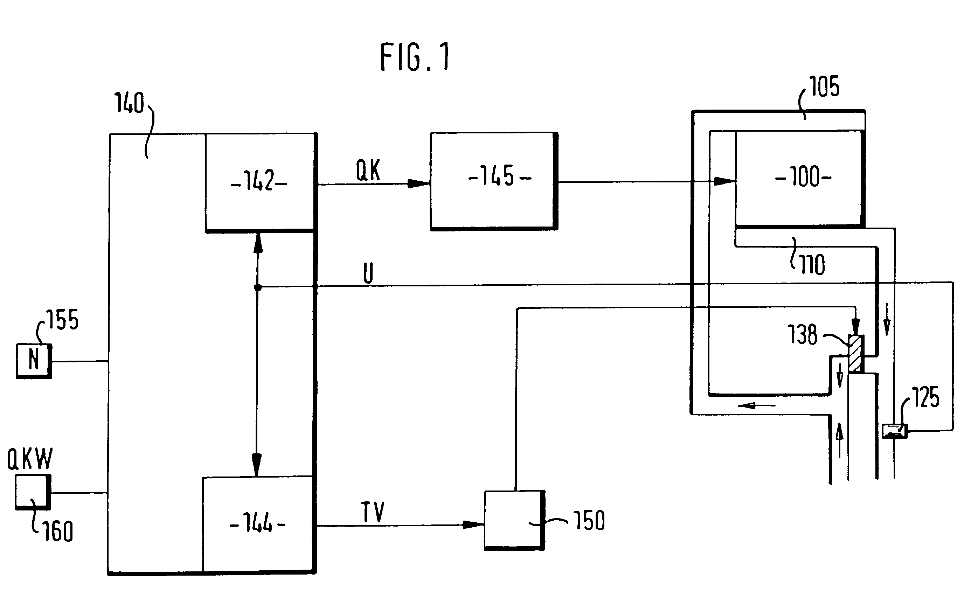

Figur 1 zeigt grob schematisch ein System zur Steuerung einer Brennkraftmaschine. Bei diesem Ausführungsbeispiel handelt es sich um eine Dieselbrennkraftmaschine. Das Verfahren und die Vorrichtung ist aber auch prinzipiell bei einer fremdgezündeten Brennkraftmaschine einsetzbar.

Eine Brennkraftmaschine 100 erhält über eine Frischluftleitung 105 Frischluft zugeführt. Das Abgas wird über eine Abgasleitung 110 abgeleitet. In der Abgasleitung 110 ist eine Lambdasonde 125 angeordnet. Über ein Abgasrückführventil 138 stehen die Abgasleitung 110 und die Frischluftleitung 105 in Verbindung.

Desweiteren ist ein elektronisches Steuergerät 140 vorgesehen. Dieses umfaßt unter anderem eine Mengensteuerung 142 und eine Abgasrückführsteuerung 144. Die Mengensteuerung 142 beaufschlagt eine Einspritzpumpe 145 mit einem Signal QK, die abhängig von diesem Signal QK der Brennkraftmaschine eine definierte Kraftstoffmenge zumißt. Die Abgasrückführsteuerung 144 steht mit einem elektropneumatischen Wandler 150 in Verbindung. Dieser elektropneumatische Wandler 150 betätigt das Abgasrückführventil 138.

Die Lambdasonde 125 liefert ein Signal U an die Mengensteuerung 142 sowie die an die Abgasrückführsteuerung 144. Dieses Signal ist in erster Näherung proportional zur Sauerstoffkonzentration im Abgas. Das elektronische Steuergerät 140 steht ferner mit verschiedenen Sensoren 155 zur Erfassung der Drehzahl und 160 zur Erfassung des Fahrerwunsches QKW in Verbindung.

Diese Einrichtung arbeitet nun wie folgt. Über das Abgasrückführventil 138 kann die Zusammensetzung, der der Brennkraftmaschine zugeführten Luft, beeinflußt werden. Die Abgasrückführsteuerung 144 gibt hierzu ein Signal TV mit einem entsprechenden Tastverhältnis an den elektropneumatischen Wandler 150. Bei einem großen Tastverhältnis öffnet das Abgasrückführventil 138 und es ergibt sich eine große Abgasrückführrate. Entsprechend ergibt sich bei einem kleinen Tastverhältnis eine kleine Abgasrückführrate.

Die Einspritzpumpe 145 führt der Brennkraftmaschine 100, die für die Verbrennung notwendige, Kraftstoffmenge zu. Die Ansteuersignale QK für die Einspritzpumpe 145 und das Tastverhältnis TV für den elektropneumatischen Wandler 150 werden von dem elektronischen Steuergerät 140 vorgegeben. Hierzu wertet das elektronische Steuergerät 140 verschiedene Signale aus. Dies sind zum einen ein Drehzahlsignal N des Drehzahlsensors 155 sowie ein Lastsignal QKW, das in Form der Fahrpedalstellung von dem Sensor 160 erfaßt wird. Ferner gelangt das Ausgangssignal der Lambdasonde 125 sowohl zur Mengensteuerung 142 als auch zur Abgasrückführsteuerung 144. Die Lambdasonde 125 ist so ausgestaltet, daß sie ein der Sauerstoffkonzentration im Abgas proportionales Ausgangssignal liefert. Dies bedeutet es bestimmte eine definierte Beziehung zwischen der Sauerstoffkonzentration im Abgas und dem Ausgangssignal U der Lambdasonde.

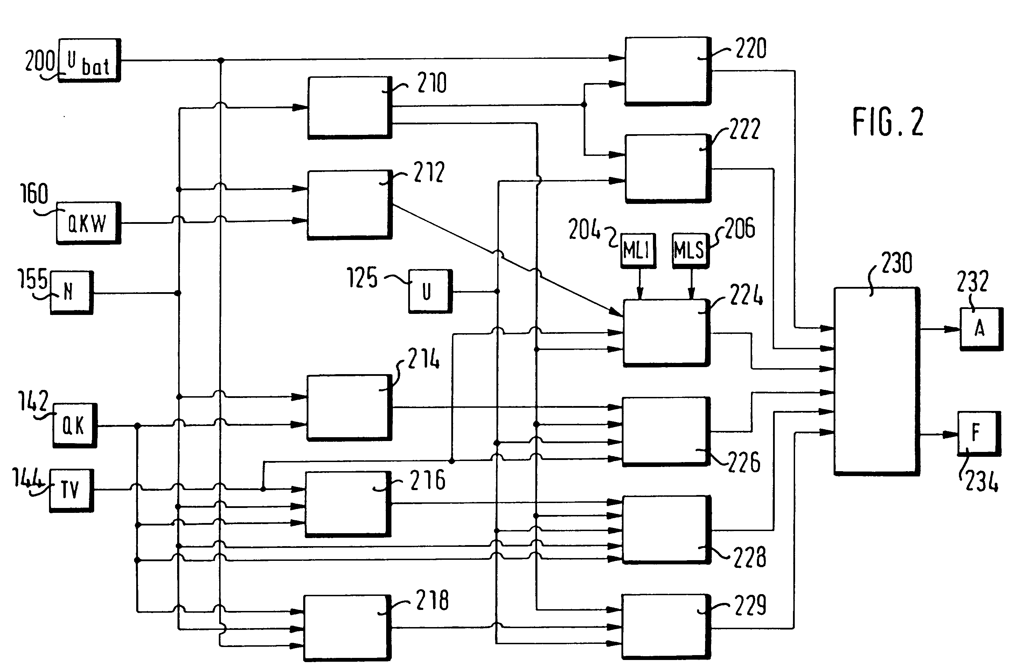

Im folgenden soll nun ein Verfahren und eine Vorrichtung zur Überwachung dieser Steuereinheit insbesondere der Lambdasonde beschrieben werden. Besonders vorteilhaft ist hierbei, daß keine zusätzlichen Sensoren benötigt werden. In Figur 2 ist schematisch eine solche Überwachungseinrichtung dargestellt. Signale bzw. Sensoren, die bereits in Figur 1 beschrieben wurden, sind mit entsprechenden Bezugszeichen gekennzeichnet.

Ein Spannungserfassungsmittel 200 erfaßt die Batteriespannung U_{bat}. Verschiedene Mittel sind vorgesehen, die bestimmte Betriebszustände erkennen. So ist eine Starterkennung 210, eine Leerlauferkennung 212, eine Schuberkennung 214, eine Stationärerkennung 216 sowie eine Kaltblaserkennung 218 vorgesehen. Die Starterkennung 210 wertet das Ausgangssignal des Drehzahlsensors 155 aus.

Der Leerlauferkennung 212 werden das Drehzahlsignal N sowie das Fahrerwunschsignal QKW des Fahrpedalstellungsgebers 160 zugeführt. Zur Schuberkennung 214 gelangt das Mengensignal QK der Mengensteuerung 142 sowie das Drehzahlsignal N des Drehzahlsensors 155. Die Stationärerkennung 216 wertet das Tastverhältnis TV der Abgasrückführsteuerung 144, das Drehzahlsignal N sowie das Mengensignal QK der Mengensteuerung 142 aus. Die Kaltblaserkennung 218 wertet die Batteriespannung U_{bat}, die Drehzahl N und das Mengensignal QK aus.

Diese Mittel zur Erkennung der Betriebszutände stehen wiederum mit verschiedenen Testeinrichtungen in Verbindung. Die Starterkennung 210 beaufschlagt ein Batterie-Tester 220 sowie einen Heizungs-Tester 222 mit dem Startsignal. Desweiteren beaufschlagt die Starterkennung 210 einen Abgasrückführregler-Tester 224, einen Sondendynamik-Tester 226, einen Sondenkennlinien-Tester 228 sowie einen zweiten Heizungs-Tester 229 mit einem Signal, das den Normalsbetrieb außerhalb des Startfalls kennzeichnet.

Die Leerlauferkennung 212 beaufschlagt den Abgasrückführregler-Tester 224 mit einem Signal. Dieses Signal zeigt den Betriebszustand Leerlauf an. Die Schuberkennung 214 beaufschlagt einen Sondendynamik-Tester 226 mit einem Signal. Dieses Signal zeigt den Betriebszustand Schubbetrieb an. Die Stationärerkennung 216 beaufschlagt einen Sondenkennlinien-Tester 228 mit einem Signal. Dieses Signal zeigt einen stationären Betriebszustand an. Die Kaltblaserkennung 218 beaufschlagt einen zweiten Heizungs-Tester 229 mit einem Signal. Ein Batterie-Tester 220 verarbeitet desweiteren ein Signal bezüglich der Batteriespannung U_{bat}.

Dem Heizungs-Tester 222 wird ferner das Ausgangssignal U der Lambdasonde 125 zugeleitet.

Dem Abgasrückführregler-Tester 224 werden ferner das Ausgangssignal TV der Abgasrückführsteuerung 144, ein Signal MLI bezüglich des Istwertes der angesaugten Luftmasse sowie ein Signal MLS bezüglich des Sollwertes der angesaugten Luftmasse zugeführt. Das Signal MLI bezüglich des Istwertes entstammt dem Block 204. Das Signal MLS entstammt dem Block 206. Diese Blöcke sind ein Bestandteil der Steuereinrichtung 140.

Der Sondendynamik-Tester 226 wertet das Ausgangssignal U der Lambdasonde 125 sowie das Tastverhältnis TV der Abgasrückführsteuerung 144 aus. Der Sondenkennlinien-Tester 228 wertet das Ausgangssignal U der Lambdasonde 125, das Drehzahlsignal N und das Mengensignal QK der Mengensteuerung 142 aus. Dem zweiten Heizungs-Tester 229 wird desweiteren das Ausgangssignal U der Lambdasonde 125 zugeleitet.

Die Ausgangssignale der Tester 220, 222, 224, 226, 228 und 229 gelangen zu einer Fehlererkennung. Diese Fehlererkennung 230 stellt zwei Signale zur Verfügung.

Die Tester sind vorzugsweise ebenfalls als Fuzzy-Logik realisisert. Neben der Realisierung als Fuzzy-Logik können aber auch Beobachter bzw. entsprechende Kennfelder oder eine Logikeinheit vorgesehen sein. Die Kennfelder bzw. die Logikeinheiten können mit diskreten Bauelementen bzw. als einzelne Programmschritte eines Mikrorechner realsisiert werden.

In der Figur 2 sind nur die wesentlichsten Signale dargestellt. Die Erkennungen und die Tester können auch noch weitere Signale auswerten, wenn entsprechende Sensoren bzw. die entsprechenden Signale zur Verfügung stehen.

Diese Einrichtung arbeitet nun wie folgt. Die Mittel zur Erkennung der verschiedenen Betriebszustände erkennen verschiedene Betriebszustände und geben entsprechende Signale an die Tester ab.

Die Starterkennung 210 wertet das Drehzahlsignal N aus. Liegt das Drehzahlsignal unter einer vorgegebenen Schwelle, die im Bereich von ca. 800 Umdrehungen pro Minute liegt, so gibt sie ein Signal ab, das den Startvorgang kennzeichnet. Wird diese Schwelle überschritten, so gibt sie nach einer vorgegebenen Zeit von wenigen Sekunden ein Signal, das den Betrieb der Brennkraftmaschine außerhalb des Starts anzeigt, ab.

Die Leerlauferkennung 212 erkennt anhand der Drehzahl und des Fahrerwunsches, ob der Betriebszustand Leerlauf vorliegt. Der Betriebszustand Leerlauf liegt beispielsweise vor, wenn die Drehzahl im Bereich der Leerlaufdrehzahl von ca 800 Umdrehungen pro Minute liegt und das Fahrpedal nicht betätigt ist.

Die Stationärerkennung 216 erkennt einen stationären Betriebszustand, wenn die Änderungsrate der überwachten Signale vorgegebene Grenzwerte nicht übersteigt. So wird beispielsweise überprüft, ob die Ableitung des Tastverhältnisses TV, der Drehzahl N und/oder des Mengensignals QK eine vorgegebene Schwelle übersteigt, bzw. ob diese Signale innerhalb eines bestimmten Zeitintervalls sich um mehr als einen vorgegebenen Betrag ändern. Liegt die Änderung der ausgewerteten Signale unterhalb bestimmter Schwellwerte wird ein stationärer Betriebszustand erkannt und ein entsprechendes Signal ausgegeben.

In bestimmten Betriebszuständen, die unter anderem von der Batteriespannung der Drehzahl und der eingespritzten Kraftstoffmenge QK abhängen, kann der Fall eintreten, daß die Abgastemperatur im Bereich der Lambdasonde 125 kleiner ist als die Betriebstemperatur der beheizten Lambdasonde. Dies führt dazu, daß die Lambdasonde durch den Abgasstrom gekühlt wird. Dieser Betriebszustand wird durch die Kaltblaserkennung 218 erkannt.

Die Erkennungen sind vorzugsweise als Logikeinheiten realisiert. Insbesondere bei der Stationärerkennung 216 ist es vorteilhaft, wenn diese als Fuzzy-Logik realisisert ist.

Erhält der Batterie-Tester 220 ein Signal von der Starterkennung 210, daß ein Startfall vorliegt, wird der Verlauf der Batteriespannung U_{bat} beobachtet. Weicht die Batteriespannung von dem vorgesehenen Verlauf ab, so erzeugt der Batterie-Tester 220 ein entsprechendes Fehlersignal.

Im Startfall bei dem das Startsignal der Starterkennung 210 vorliegt, überprüft der Heizungs-Tester 222, ob das Ausgangssignal U der Lambdasonde 125 den erwarteten Werten bzw. dem erwarteten Zeitlichen Verlauf der Werte entspricht.

Durch Auswertung des Sollwertes MLS, des Istwertes MLI für die angesaugte Luftmasse und des Tastverhältnisses TV der Abgasrückführsteuerung 144 überprüft der Abgasrückführregelungs-Tester 224, ob die Steller und Regler der Abgasrückführregelung ordnungsgemäß arbeiten. Diese Überprüfung erfolgt vorzugsweise im Leerlauf.

Üblicherweise wird die Lambdasonde beheizt. Dabei wird die Temperatur der Lambdasonde auf einen bestimmten Temperaturwert geregelt. Im Normalbetrieb und wenn die Kaltblaserkennung 218 einen Betriebszustand erkennt, in dem die Abgastemperatur kleiner ist als der Temperaturwert auf den die Lambdasonde geregelt wird, überprüft der zweite Heizungs-Tester 229, ob ein entsprechendes Ausgangsignal U der Lambdasonde 125 vorliegt. Somit kann die korrekte Funktion der Heizung überprüft werden.

Das Signal A der Fehlererkennung 230 gibt lediglich an, daß ein Fehler vorliegt. Mit dem zweiten Signal F wird dieses Fehlersignal der fehlerhaften Einrichtung zugeordnet. Die Signale A und F werden entsprechenden Blöcken 232 und 234 zugeleitet, die diese Signale weiter verarbeiten. So kann beispielsweise vorgesehen sein, daß abhängig vom Signal F eine entsprechende Kontrollleuchte aktiviert bzw. ein Speicherbit gesetzt wird, welches bei der Diagnose im Rahmen des Kundendienstes ausgewertet wird.

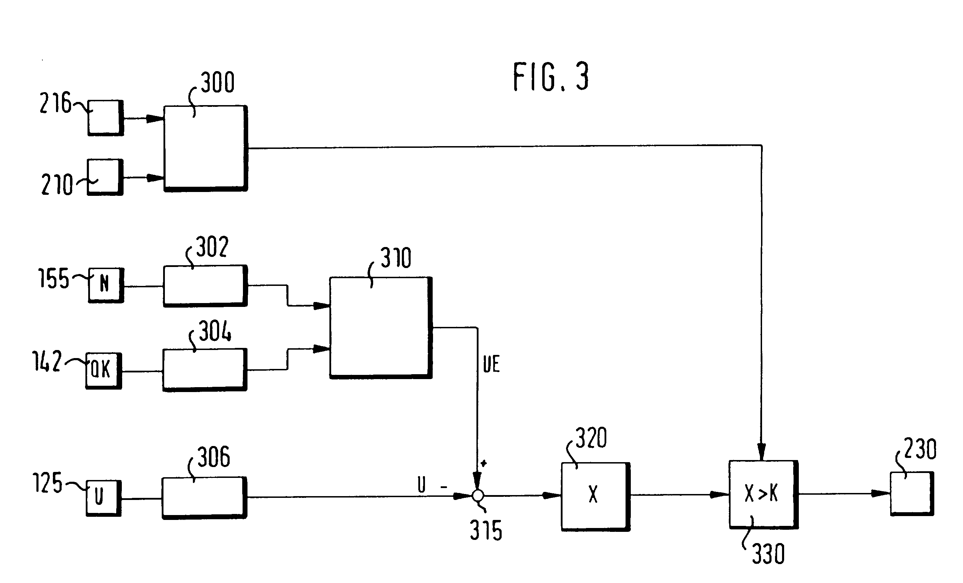

Anhand der Figur 3 wird nun die Arbeitsweise der Tester am Beispiel des Sondenkennlinien-Testers 228 näher beschrieben. Bereits beschriebene Signale und Blöcke sind mit entsprechenden Bezugszeichen bezeichnet und werden hier nicht erneut beschrieben.

Das Signal der Starterkennung 210, das den Betrieb außerhalb des Starts anzeigt, und das Ausgangsssignal der Stationärerkennung 218 werden in einem UND-Gatter 300 logisch verknüpft. Das Ausgangssignal des UND-Gatters 300 gelangt zu einer Schwellwertabfrage 330. Das Drehzahlsignal N gelangt über einen ersten Singalformer 302 zu einem Beobachter 310. Das Mengensignal QK gelangt über einen zweiten Signalformer 304 ebenfalls zu dem Beobachter 310. Das Ausgangssignal U der Lambdasonde 125 gelangt über einen dritten Signalformer 306 zu einem Additionspunkt 315, der dieses Signal mit dem Ausgangssignal des Beobachters 310 verknüpft. Dieses verknüpfte Signal gelangt dann über einen Absolutwertbildner 320 zu der Schwellwertabfrage 330. Am Ausgang dieser Schwellwertabfrage steht dann das Ausgangssignal des Testers zur Verfügung. Dieses gelangt dann zur Fehlererkennung 230. Die Signalformer 302, 304 und 306 sind vorzugsweise als PT1-Glieder realisiert.

Diese Einrichtung arbeitet nun wie folgt. Ausgehend von dem Drehzahlsignal N und dem Mengensignal QK bestimmt der Beobachter 310 einen zu erwartenden Wert UE für das Ausgangssignal der Lambdasonde 125. Dieser erwartete Wert UE wird im Additionspunkt 315 mit dem gemessenen Wert U verglichen. Ausgehend von diesem Vergleichsergebnis berechnet der Absolutwertermittler 320 den Absolutwert X. Dieser Absolutwert wird dann in der Schwellwertabfrage mit einem Schwellwert K verglichen. Ist der Absolutbetrag der Abweichung zwischen dem erwarteten und dem erfaßten Wert für das Lambdasondensignal größer als der Schwellwert K, so gibt die Schwellwertabfrage ein entsprechendes Fehlersignal an die Fehlererkennung 230.

Die Schwellwertabfrage 330 führt die Überprüfung nur dann durch, wenn von dem UND-Gatter 300 ein entsprechendes Signal vorliegt. Dieses Signal liegt vor, wenn sich die Brennkraftmaschine in einem stationären Betriebszustand außerhalb des Starts befindet. Dies bedeutet, daß Stationärerkennung 216 bzw. die Starterkennung 210 ein entsprechendes Signal an das UND-Gatter liefern. Die Überprüfung erfolgt nur außerhalb des Startvorganges, wenn stationäre Betriebszustände vorliegen.

In stationären Betriebszuständen bestimmt der Beobachter 310 ausgehend von dem Drehzahlsignal (N) und einem die eingespritzte Kraftstoffmenge angebenden Signal (QK) ein erwarteter Wert (UE) für das Ausgangsignal der Lambdasonde. Die Schwellwertabfrage 330 erkennt einen Fehler, wenn der erwartete Wert (UE) für das Ausgangssignal der Lambdasonde um mehr als ein Schwellwert (K) von dem gemessenen Ausgangssignal der Lambdasonde abweicht.

In stationären Betriebszuständen wird überprüft, ob das Ausgangssignal der Lambdasonde, bestimmte erwartete Werte UE annimmt. Hier wird die stationäre Genauigkeit der Lambdasonde überprüft. Durch diese Vorgehensweise kann ein Defekt der Lambdasonde erkannt werden, der nicht zu unzulässig hohen bzw. niederen Werten führt, die mittels einer Abfrage auf fest vorgebbare Schwellwerte erkannt werden.

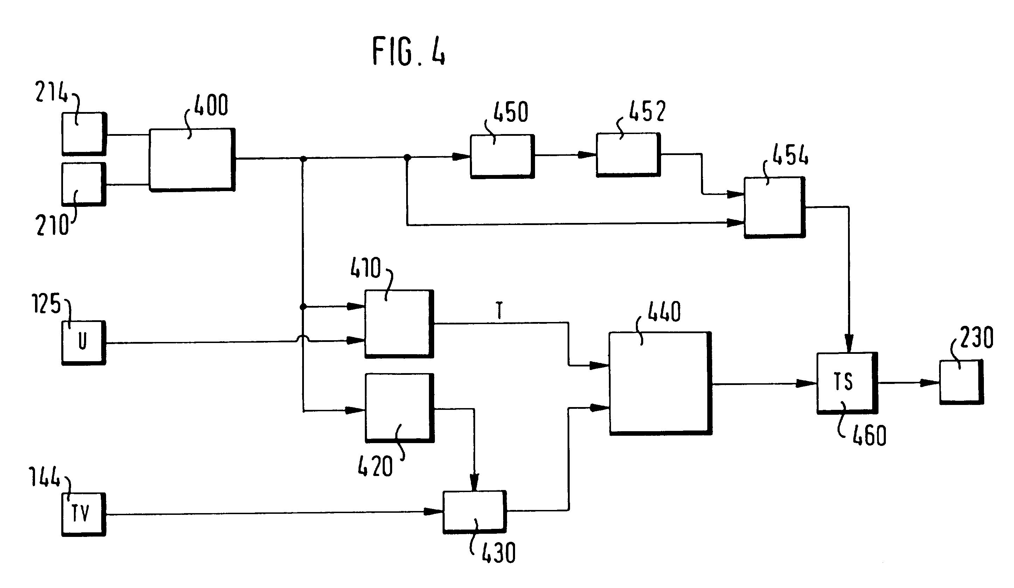

In Figur 4 ist als weiteres Beispiel der Sondendynamik-Tester 226 detaillierter dargestellt. Ein UND-Gatter 400 verknüpft die Ausgangssignale der Schuberkennung 214 und der Starterkennung 210. Das Ausgangssignal dieses UND-Gatters 400 gelangt zu einer ersten Schwellwertabfrage 410, zu einem ersten Zeitglied 450 und zu einem zweiten Zeitglied 420. Der Schwellwertabfrage 410 wird desweiteren das Ausgangssignal U der Lambdasonde 125 zugeführt.

Das Ausgangssignal des zweiten Zeitglieds 420 gelangt zu einer Tastverhältnissvorgabe 430, an derem Eingang das Tastverhältnis TV der Abgasrückführsteuerung 144 anliegt. Das Ausgangssignal der Tastverhältnisvorgabe 430 sowie das Ausgangssignal T der Schwellwerterfassung gelangt zu dem Beobachter 440. Dessen Ausgangssignal wiederum gelangt über eine zweite Schwellwertabfrage 460 zu der Fehlererkennung 230.

Das Ausgangssignal des UND-Gatters 400 gelangt über das erste Zeitglied 450 und den Inverter 452 zu einem weiteren UND-Gatter 454 sowie direkt zu dem weiteren UND-Gatter 454. Das weitere UND-Gatter 454 beaufschlagt wiederum die Schwellwertabfrage 460 mit einem entsprechenden Signal, dahingehend, daß die Schwellwertabfrage nur dann erfolgt, wenn am UND-Gatter 454 ein entsprechendes Signal anliegt.

Diese Einrichtung arbeitet nun wie folgt. Das UND-Gatter 400 erkennt, ob im Normalbetrieb außerhalb des Starts ein Schubbetrieb vorliegt. Die Schwellwertabfrage 410 ermittelt die Zeit T, innerhalb der nach Auftreten des Schubbetriebs das Ausgangssignal U der Lambdasonde eine vorgegebene Schwelle über- bzw. unterschreitet. Diese Zeitdauer T wird dann dem Beobachter 440 zugeführt. Gleichzeitig stellt das zweite Zeitglied 24 sicher, daß das Tastverhältnis TV zum Zeitpunkt des Erkennens des Schubbetriebs für eine bestimmte Zeitdauer konstant gehalten wird. Am Ausgang der Tastverhältnissvorgabe 430 liegt für die bestimmte Zeitdauer das Ausgangssignal an, das zu Beginn des Schubsignals am Ausgang der Abgasrückführsteuerung 144 angelegen hat.

Ausgehend von der Zeitdauer T, innerhalb der das Ausgangssignal U der Lambdasonde über den Schwellwert angestiegen ist und dem Tastverhältnis TV zu Beginn des Schubbetriebs erkennt der Beobachter 440, ob ein Fehlerfall vorliegt. Liegt dieses Signal außerhalb eines vorgegebenen Schwellwerts TS, so wird ein Fehlersignal an die Fehlererkennung 230 übermittelt.

Das erste Zeitglied in Verbindung mit dem Inverter 452 und dem UND-Gatter 454 gewährleistet, daß bei Verlassen des Schubbetriebs der Überprüfvorgang nach Ablauf einer vorgegebenen Zeitspanne TM erfolgt. Die Schwellwertabfrage 460 erfolgt nach Ablauf der Zeitspanne TM nach Beginn des Schubbetriebs. Vorzugsweise werden dies vorgebene Zeitspanne TM und die bestimmte Zeitdauer, für die die Tastverhältnisvorgabe einen konstanten Wert vorhält, gleich gewählt. Die Zeitspanne TM ist so gewählt, daß sie der größten möglichen Zeitdauer TS entspricht. Liegt innerhalb dieser Zeitspanne TM keine gemessene Zeit T am Eingang des Beobachters 440, so wird auf Fehler erkannt.

Dieser Vorgehensweise liegt der Gedanke zugrunde, daß im Schubbetrieb keine Kraftstoffmenge eingespritzt wird, und daher innerhalb einer gewissen Zeit das Ausgangssignal der Lambdasonde 125 den maximal möglichen Sauerstoffgehalt anzeigt. Wird dieses Ausgangssignal, das dem maximalen Sauerstoffgehalt entspricht, nicht innerhalb einer bestimmten Zeitdauer TS erreicht, so muß von einem Fehler insbesondere im Bereich der Lambdasonde ausgegangen werden. Der Beobachter vergleicht die erwartete Anstiegszeit mit der gemessenen Zeit T, innerhalb der das Ausgangssignal der Lambdasonde 125 über den Schwellwert angestiegen ist. Die erwartete Anstiegszeit gibt der Beobachter abhängig von dem Tastverhältnis TV der Abgasrückführsteuerung 144 vor.

Mit dieser Vorgehensweise kann die Dynamik der Lambdasonde überprüft werden. Insbesondere wird ein Fehler erkannt, wenn dieser Anstieg des Signals nicht innerhalb einer vorgegebenen Zeit, also zu langsam oder zu schnell, erfolgt.

Mit dieser besonderen Ausgestaltung der Erfindung mittels eines Beobachters ist es möglich, diese Einrichtung und insbesondere den Lambdasensor auch dann zu überwachen und Fehler zu erkennen, wenn das Ausgangssignal innerhalb einer vorgebbaren Zeit TS nicht vorgegebene Schwellwerte unter- bzw. überschreitet.

Für den Beobachter 310 bzw. 410 gibt es verschiedene Arten der Realisierung. So kann der Beobachter 310 bzw. 410 im einfachsten Fall als Kennfeld realisiert werden, indem abhängig von Drehzahl N und der Kraftstoffmenge QK der erwartete Wert UE für das Ausgangssignal der Lambdasonde 125 abgelegt ist. Desweiteren ist es möglich, diese Beobachter als entsprechende Logikeinheit zu realisieren. Eine besonders vorteilhafte Ausgestaltung ergibt sich, wenn der Beobachter als Fuzzy-Logik realisiert wird.

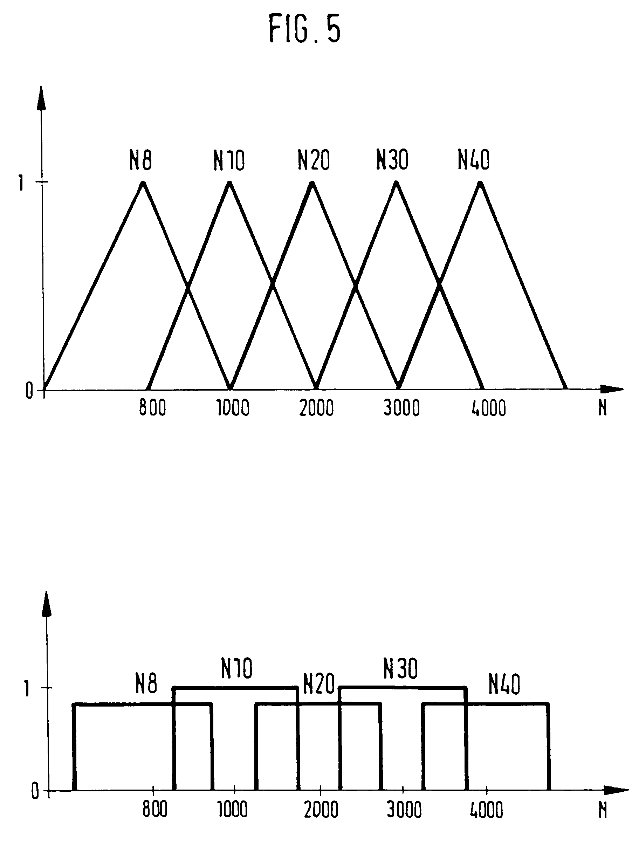

In der jeweiligen Fuzzy-Logik werden die auszuwertenden Signale bestimmten Wertebereichen zugeordnet. Die Stärke der Zuordnung jedes einzelnen Werts zu eines Wertebereichs zu einer Kategorie wird durch eine Zugehörigkeitsfunktion festgelegt. In Figur 5 sind die Zugehörigkeitsfunktionen für verschiedene Kategorien der Drehzahl aufgetragen.

Mit N8 ist die Zugehörigkeitsfunktion für die Drehzahl 800 Umdrehungen pro Minute aufgezeichnet. Diese Drehzahl entspricht der Leerlaufdrehzahl. Mit N10 ist die Zugehörigkeitsfunktion für die Drehzahl 1000 Umdrehungen pro Minute bezeichnet. Mit N20 ist die Zugehörigkeitsfunktion für die Drehzahl 2000 Umdrehungen pro Minute bezeichnet. Mit N30 ist die Zugehörigkeitsfunktion für die Drehzahl 3000 Umdrehungen pro Minute bezeichnet. Mit N40 ist die Zugehörigkeitsfunktion für die Drehzahl 4000 Umdrehungen pro Minute bezeichnet.

Mit N8 ist die Zugehörigkeitsfunktion für die Drehzahl 800 Umdrehungen pro Minute aufgezeichnet. Diese Drehzahl entspricht der Leerlaufdrehzahl. Mit N10 ist die Zugehörigkeitsfunktion für die Drehzahl 1000 Umdrehungen pro Minute bezeichnet. Mit N20 ist die Zugehörigkeitsfunktion für die Drehzahl 2000 Umdrehungen pro Minute bezeichnet. Mit N30 ist die Zugehörigkeitsfunktion für die Drehzahl 3000 Umdrehungen pro Minute bezeichnet. Mit N40 ist die Zugehörigkeitsfunktion für die Drehzahl 4000 Umdrehungen pro Minute bezeichnet.

Die Zugehörigkeitsfunktionen sind jeweils normiert und nehmen Werte zwischen Null und Eins an. Der Wert 0 gibt an, daß keine Zugehörigkeit zur betrachteten Kategorie vorliegt und der Wert 1 weist auf eine vollständige Zugehörigkeit hin. Als Funktionsverlauf wird üblicherweise die in Figur 5a dargestellte Dreiecksfunktion gewählt. Wird dagegen eine Rechteckfunktion, wie in Figur 5b dargestellt, gewählt ergeben sich wesentlich geringere Rechenzeiten.

In der Fuzzy-Logik sind verschiedene Regeln abgelegt. Diese Regeln bestehen aus Erfahrungswerten. Mit diesen Regeln werden die einzelnen Zugehörigkeitsfunktionen der verschiedenen ausgewerteten Signale verknüpft. Anhand dieser Regeln wird abhängig von den verarbeiteten Signalen, der verschiedenen Betriebskenngrößen ein erwarteter Wert UE für die Sondenspannung ermittelt.

Durch die Verwendung der Fuzzy-Logik ist es möglich die Wirkung von Einflußgrößen auf das Systemverhalten besser als mit konventionellen Methoden zu berücksichtigen.

## Patentansprüche

1. Verfahren zur Überwachung einer Steuereinrichtung einer Brennkraftmaschine, bei dem im Schubbetrieb ein gemessener Wert mit einem erwarteten Wert verglichen und auf Fehler erkannt wird, wenn der gemessene Wert um mehr als einen Schwellwert von dem erwarteten Wert abweicht, dadurch gekennzeichnet, daß ein Fehler erkannt wird, wenn das Ausgangssignal der Lambdasonde einen bestimmten Wert nicht innerhalb eines vorgegebenen endlichen Zeitraums nach Erkennen des Schubbetriebs erreicht.

2. Verfahren nach Anspruch 1, dadurch gekennzeichnet, daß der erwartete Zeitraum und/oder der erwartet Wert wenigstens abhängig von einer Betriebskenngröße vorgegeben wird.

3. Verfahren nach Anspruch 1 oder 2, dadurch gekennzeichnet, daß der erwartete Zeitraum ausgehend von wenigstens einem, die Stellgröße eines die Luftmasse bestimmenden Stellgliedes angebenden, Signals vorgebbar ist.

4. Vorrichtung zur Überwachung einer Steuereinrichtung einer Brennkraftmaschine, mit ersten Mitteln, die einen Schubbetrieb erkennen, mit Erfassungsmitteln zur Erfassung eines gemessenen Werts, mit Vergleichsmitteln, die den gemessenen Wert mit einem erwarteten Wert vergleichen, und mit zweiten Mitteln, die auf Fehler erkennen, wenn der gemessene Wert um mehr als einen Schwellwert von dem erwarteten Wert abweicht, dadurch gekennzeichnet, daß die zweiten Mittel einen Fehler erkennen, wenn das Ausgangssignal der Lambdasonde einen erwarteten Wert nicht innerhalb eines vorgegebenen endlichen Zeitraums nach Erkennen des Schubbetriebs erreicht.

5. Vorrichtung nach Anspruch 4, dadurch gekennzeichnet, daß als erstes und/oder als zweites Mittel eine Logikeinheit oder ein Beobachter vorgesehen ist.

6. Vorrichtung nach Anspruch 4, dadurch gekennzeichnet, daß als Logikeinheit eine Fuzzy-Logik vorgesehen ist.

## Claims

1. Method for monitoring a control apparatus of an internal combustion engine, in which, in overrun conditions, a measured value is compared with an anticipated value and errors are detected if the measured value deviates from the anticipated value by more than a threshold value, characterized in that an error is detected if the output signal of the lambda probe does not reach a specific value within a prescribed finite time period after the overrun conditions have been detected.

2. Method according to Claim 1, characterized in that the anticipated time period and/or the anticipated value is prescribed at least as a function of one operational characteristic variable.

3. Method according to Claim 1 or 2, characterized in that the anticipated time period can be prescribed on the basis of at least one signal which indicates the manipulated variable of an actuator element which determines the air mass flow rate.

4. Device for monitoring a control device of an internal combustion engine, having first means which detect overrun conditions, having detection means for detecting a measured value, having comparison means which compare the measured value with an anticipated value, and having second means which detect errors if the measured value deviates from the anticipated value by more than a threshold value, characterized in that the second means detect an error if the output signal of the lambda probe does not reach an anticipated value within a prescribed finite time period after the overrun conditions have been detected.

5. Device according to Claim 4, characterized in that a logic unit, or an observer, is provided as first and/or second means.

6. Device according to Claim 4, characterized in that a fuzzy logic system is provided as logic unit.

## Revendications

1. Procédé pour surveiller un dispositif de commande d'un moteur à combustion interne, dans lequel on compare en fonctionnement en poussée une valeur mesurée à une valeur attendue et on conclut à un défaut, quand la valeur mesurée s'écarte de la valeur attendue de plus d'une valeur de seuil,
caractérisé en ce que
l'on détecte un défaut quand le signal de sortie de la sonde lambda n'atteint pas une valeur déterminée à l'intérieur d'un intervalle de temps fini prédéterminé, après avoir détecté le fonctionnement en poussée.

2. Procédé selon al revendication 1,
caractérisé en ce que
l'intervalle de temps attendu et/ou la valeur attendue est prédéfini au moins en fonction d'une grandeur de fonctionnement.

3. Procédé selon la revendication 1 ou 2,
caractérisé en ce que
l'intervalle de temps attendu peut être prédéfini en partant d'au moins un signal qui indique la grandeur de commande d'un organe de commande qui détermine la masse d'air.

4. Dispositif pour contrôler un dispositif de commande d'un moteur à combustion interne, comprenant des premiers moyens qui détectent un fonctionnement en poussée, des moyens de détection qui servent à détecter une valeur mesurée, des moyens de comparaison qui comparent la valeur mesurée à une valeur attendue, et des seconds moyens qui concluent à un défaut, quand la valeur mesurée s'écarte de la valeur attendue de plus d'une valeur de seuil,
caractérisé en ce que
les seconds moyens détectent un défaut, quand le signal de sortie de la sonde lambda n'atteint pas une valeur attendue à l'intérieur d'un intervalle de temps fini, prédéterminé, une fois qu'a été détecté le fonctionnement en poussée.

5. Dispositif selon la revendication 4
caractérisé en ce qu'
on prévoit comme premier et/ou comme deuxième moyen une unité logique ou un observateur.

6. Dispositif selon la revendication 4,
caractérisé en ce que
l'on prévoit comme unité logique un circuit logique de Fuzzy.
